# EUROPÄISCHE PATENTSCHRIFT

(11) **EP 4 424 489 B1**
(45) Veröffentlichungstag und Bekanntmachung des Hinweises auf die Patenterteilung: **20.08.2025**
(21) Anmeldenummer: 23159982.0
(22) Anmeldetag: 03.03.2023
(51) Int. Cl.: B29C 48/05, B29B 9/06, A23P 10/25, A23P 30/20, A23N 17/00

(54) **SCHNEIDAPPARAT FÜR EXTRUDER UND VERFAHREN ZUR HERSTELLUNG EINES EXTRUDIERTEN MATERIALS**
CUTTING APPARATUS FOR EXTRUDER AND PROCESS FOR PRODUCING AN EXTRUDED MATERIAL
DISPOSITIF DE COUPE POUR EXTRUDEUSES ET PROCÉDÉ DE FABRICATION D'UN MATERIAU EXTRUDÉ

(43) Veröffentlichungstag der Anmeldung: 04.09.2024
(73) Patentinhaber: Bühler AG, 9240 Uzwil (CH)
(72) Erfinder: Renner, Florian, 78476 Allensbach (DE)
(74) Vertreter: Hepp Wenger Ryffel AG

(56) Entgegenhaltungen:
- CN-U- 207 290 623
- US-A- 3 343 213
- US-A1- 2010 187 707
- US-A1- 2016 304 295
- US-A1- 2020 215 721
- US-A1- 2022 332 017

## Beschreibung

Die vorliegende Erfindung betrifft einen Schneidapparat für einen Extruder, insbesondere einen Extruder zur Herstellung eines Nahrungsmittels oder Tierfutters.

Wie aus den Druckschriften US 2010/187707 A1, US 2016/304295 A1, CN 207 290 623 U, US 3 343 213 A, US 2020/215721 A1 und US 2022/332017 A1 zu entnehmen ist, sind Extruder Maschine in denen Materialien wie Polymere, Elastomere oder proteinhaltige Mischungen für die Herstellung von Lebensmitteln einschliesslich Cerealien, Snacks, Tierfutter und alternativer Nahrungsmittel unter gewünschten Druck- und Temperaturbedingungen behandelt werden können. Ein typischer Extruder umfasst mindestens eine Extruderschneckenwelle, wobei jede der Extruderschneckenwellen einen Satz von Extruderschneckenelementen aufweist, die auf einer Tragwelle montiert sind. Die Extruderschneckenwellen sind in einem Zylinder untergebracht, welcher als Barrel bezeichnet wird. Ein Extruder umfasst üblicherweise mehrere Barrels, die Ende an Ende miteinander verbunden sind. Mehrere Barrels sind erforderlich, um die verschiedenen in dem Extruder durchzuführenden Prozesse wie Fördern, Kneten, Mischen, Entgasen, Dosieren und dergleichen auszuführen. Für verschiedene Anwendungen muss am Ausgang des Extruders ein Schneidapparat angeordnet werden. Dabei handelt es sich um eine Einheit, welche ein Gehäuse und ein im Gehäuse angeordnetes Schneidwerkzeug umfasst. Das Schneidwerkzeug umfasst üblicherweise ein oder mehrere Messer, welches mittels eines Motors in eine Drehbewegung versetzt werden und in den Schneidapparat eintretendes Extrudat zerkleinern können.

Ein Extruder mit Schneidwerkzeug ist beispielsweise aus der EP-3 539 748 A1 bekannt. Derartige Extruder sind zudem kommerziell erhältlich, wie beispielsweise der BCTL POLYtwin^{™} der Firma Bühler. Der Schneidapparat ist hierbei vorzugsweise über eine befestigungsplatte mit dem Extruder verbunden und kann beispielsweise zu Reinigungszwecken seitlich verschoben werden, wodurch der Extruderausgang zugänglich wird.

Um das zerkleinerte Material aus dem Schneidapparat zu entfernen, wird üblicherweise ein Luftstrom durch den Schneidapparat geleitet, welcher das Material durch eine unten am Schneidapparat angeordnete Auslassöffnung mit Unterstützung der Schwerkraft austrägt.

Diese bekannte Ausgestaltung eines Schneidapparats weist den Nachteil auf, dass unterhalb des Schneidwerkzeugs ein Rohr oder ein Schlauch angeordnet werden muss, welcher mit der Auslassöffnung verbunden ist und das durch den Luftstrom ausgetragene Material aufnimmt und weiterleitet. Dies erschwert die Reinigung des Gebäudes, in welchem der Extruder installiert ist. Während Schläuche flexibler und somit zu Reinigungszwecken einfacher umpositioniert werden könne, sind Rohre aufgrund ihrer glatten Oberfläche hygienischer, aber auch weniger einfach umpositionierbar.

Weiterhin erfolgt das Austragen des zerkleinerten Materials aus dem Schneidapparat bei dieser Ausgestaltung dadurch, dass ein Luftstrom von oben in den Schneidapparat eingeleitet wird, diesen vertikal nach unten durchströmt, dabei zerkleinertes Material aufnimmt und den Schneidapparat mit dem Material unten verlässt. Dies ist keine optimale Strömungsführung, unter anderem weil der Luftstrom eine Belastung auf das zerkleinerte Material ausübt. Das extrudierte Material kann durch den Aufprall an den Gehäusewänden deformiert werden und dadurch die Produktqualität mindern.

Es war die Aufgabe der vorliegenden Erfindung, einen Schneidapparat für einen Extruder bereitzustellen, mit welchem die vorstehend beschriebenen Nachteile des Stands der Technik überwunden werden.

Diese Aufgabe wird durch die vorliegende Erfindung gelöst.

Im Detail betrifft die vorliegende Erfindung einen Schneidapparat für einen Nahrungs- oder Futtermittelextruder, umfassend ein Gehäuse mit einem zylindrischen Innenraum,
ein Schneidwerkzeug,
einen Produkteinlass an einem Ende des Gehäuses, wobei das Schneidwerkzeug und der Produkteinlass koaxial im Gehäuse angeordnet sind,
ein Einlassrohr und ein Auslassrohr,
dadurch gekennzeichnet, dass wenn der Schneidapparat am Auslassende des Extruders oder am Auslassende eines am Auslassende des Extruders bereitgestellten Kühlwerkzeugs angeordnet ist, das Einlassrohr und das Auslassrohr von oben in das Gehäuse münden und sich vom Gehäuse nach oben weg erstrecken, und zumindest in einem Abschnitt, der mit dem Gehäuse verbunden ist, schräg in gegenüberliegende seitliche Bereiche des Innenraums münden und zueinander hin geneigt sind, wobei der Neigungswinkel zwischen 30 und 80° liegt.

Der erfindungsgemässe Schneidapparat zeichnet sich dadurch aus, dass das Einlassrohr und das Auslassrohr für durch den Schneidapparat zu leitende Luft so angeordnet sind, dass die Luft in den Schneidapparat von oben oder seitlich, vorzugsweise von oben eingeleitet beziehungsweise abgesaugt wird und den Schneidapparat nach oben oder seitlich, vorzugsweise nach oben verlässt. Dies hat den Vorteil, dass Schläuche und Rohre, welche mit dem Einlassrohr und dem Auslassrohr zu verbinden sind, oberhalb oder seitlich, vorzugsweise oberhalb des Schneidapparats angeordnet werden können. Der Raum unterhalb des Schneidapparats bleibt frei und kann einfach gereinigt oder für andere Zwecke verwendet werden.

Zudem sind das Einlassrohr und das Auslassrohr derart angeordnet, dass ein hindurch geleiteter Luftstrom im Schneidapparat eine Zyklonströmung ausbildet. Dies führt zu einer schonenderen und effizienteren Austragung des zerkleinerten Materials aus dem Schneidapparat. Ferner prallt das extrudierte Material nicht frontal gegen die Gehäusewände, sondern gleitet durch die rotierende Bewegung des Luftstroms und Rundungen des Gehäuses an den Gehäusewänden vorbei.

Eine nach oben ausgerichtete Anordnung von Einlassrohr und Auslassrohr wurde in einem Gerät der Firma Frazer-Nash realisiert (https://www.youtube.com/watch?v=Rd2NnqRNFDU). Allerdings wurden dort das Einlassrohr und das Auslassrohr nicht derart angeordnet, dass innerhalb des Schneidapparats eines Zyklonströmung ausgebildet wird. Die Luft wird vertikal von oben eingeleitet, erfährt am Boden des Schneidapparats eine Strömungsumkehr und verlässt den Schneidapparat vertikal nach oben. Die mit einer vertikalen Luftströmung durch den Schneidapparat verbundenen Nachteile wurden nicht erkannt. Zudem sind bei diesem Gerät das Schneidwerkzeug und der Produkteinlass nicht koaxial im Gehäuse des Schneidapparats angeordnet. Das Material erfährt keine schonende Beförderung, sondern prallt auf Begrenzungsflächen.

Um die Zyklonströmung zu erzeugen, muss das Gehäuse des Schneidapparats einen zylindrischen Innenraum aufweisen. Die Luft kann an der Innenseite der Mantelfläche des zylindrischen Innenraums entlang strömen.

Einlassrohr und das Auslassrohr sind vorzugsweise derart an dem Gehäuse des Schneidapparats angeordnet, dass sie schräg und tangential zum Gehäusemantel in gegenüberliegende seitliche Bereiche des Innenraums münden. Auf diese Weise kommt Luft aus dem Einlassrohr in Kontakt mit der Innenseite der Mantelfläche des zylindrischen Innenraums, strömt an dieser entlang und verlässt den Schneidapparat ohne weitere Umlenkung. Die Anordnung von Einlassrohr und Auslassrohr unterstützt somit die Erzeugung einer Zyklonströmung im Schneidapparat, genauer in dessen zylindrischem Innenraum. Unkontrollierte Verwirbelungen des Luftstroms werden vermieden.

Die vorstehend beschriebene Anordnung von Einlassrohr und Auslassrohr wird dadurch erreicht, dass die beiden Rohre von oben in das Gehäuse münden und zumindest in einem Abschnitt, der mit dem Gehäuse verbunden ist, zueinander hin geneigt sind. Der Neigungswinkel liegt zwischen 30 und 80°, bevorzugt zwischen 45 und 70°.

Es ist hierbei bevorzugt, dass die Rohre in einem Abschnitt, der mit dem Gehäuse verbunden ist, zueinander hin geneigt sind. Dieser Abschnitt erstreckt sich vorzugsweise bis zu einer Höhe von 20 cm, besonders bevorzugt bis zu einer Höhe von 15 cm, ausgehend von der Aussenseite des Gehäuses des Schneidapparats. Daran anschliessend werden Einlassrohr und Auslassrohr vorzugsweise vertikal nach oben vom Schneidapparat weg geführt.

Das Einlassrohr und das Auslassrohr werden vorzugsweise aus einem Material gefertigt, welches üblicherweise für derartige Rohre eingesetzt wird. Beispielhaft sei ein Metall oder eine metallhaltige Verbindung wie Edelstahl genannt.

Einlassrohr und Auslassrohr haben einen Durchmesser, wie er üblicherweise auch für die Verbindungsrohre und Verbindungsschläuche aus dem Stand der Technik verwendet werden. Vorzugsweise liegen die Durchmesser im Bereich von 50-400 mm, besonders bevorzugt 60-350 mm.

Gemäss einer bevorzugten erfindungsgemässen Ausführungsform kann das Auslassrohr einen Durchmesser aufweisen, welcher den Durchmesser des Einlassrohres überschreitet. Auf diese Weise kann ein effizientes Austragen des zerkleinerten Materials gewährleistet werden. Vorzugsweise ist der Durchmesser des Auslassrohres 10-50% grösser als der Durchmesser des Einlassrohres.

Zur Erzeugung der Zyklonströmung ist es erforderlich, dass der Innenraum des Gehäuses des Schneidapparats zylindrisch ist. Gemäss einer bevorzugten Ausführungsform der vorliegenden Erfindung ist jedoch das Gehäuse des Schneidapparats ebenfalls gerundet, insbesondere zylindrisch, das heisst es hat bevorzugt eine zylindrische Aussenform. Auf diese Weise wird ein hygienisches Design realisiert und unnötiger Totraum im Gehäuse vermieden; die Gehäusewand kann als Begrenzung des Innenraums verwendet werden.

Bei dieser bevorzugten Ausführungsform sind das Einlassrohr und das Auslassrohr derart am Gehäuse des Schneidapparats angeordnet, dass eine gedachte Linie durch eine äussere Kante des Einlassrohrs und des Auslassrohrs in Bezug auf das zylindrische Gehäuse eine Tangente ist. Unter einer Aussenkante ist hierbei die Kante eines Rohres zu verstehen, welche vom anderen Rohr am weitesten entfernt und somit in einer Vorderansicht aus den Schneidapparat am weitesten aussen angeordnet ist.

Das Gehäuse ist vorzugsweise aus einem Material gefertigt, welches üblicherweise für Gehäuse derartiger Schneidapparate eingesetzt wird. Beispielhaft sei ein Metall oder eine metallhaltige Verbindung wie Edelstahl genannt.

Der erfindungsgemässe Schneidapparat weist übliche Dimensionen wie analoge Geräte aus dem Stand der Technik auf.

In dem Schneidapparat ist ein Schneidwerkzeug angeordnet. Vorzugsweise handelt es sich um ein oder mehrere Messer, die drehbar in dem Innenraum des Gehäuses des Schneidapparats angeordnet sind. Dies ist herkömmlich bekannt.

Das Schneidwerkzeug ist mit einem Motor verbunden, welcher das Schneidwerkzeug in die gewünschte Bewegung versetzen kann, beispielsweise in die vorstehend beschriebene Drehbewegung. Der Motor ist an einem Ende des Schneidapparats angeordnet und beispielsweise über eine Welle mit dem Schneidwerkzeug verbunden. Dies ist hinlänglich bekannt.

Der Schneidapparat weist zudem einen Produkteinlass in Form einer Öffnung auf, welche fluidisch mit dem Auslass eines Extruders verbunden werden kann, sodass extrudiertes Material aus dem Extruder in den Schneidapparat gelangen kann. Vorzugsweise ist dieser Produkteinlass in der Seitenfläche des Schneidapparats angeordnet, welche der Seitenfläche gegenüberliegt, an welcher der Motor angeordnet ist.

Gemäss einer bevorzugten Ausführungsform der vorliegenden Erfindung ist der Produkteinlass im Schneidapparat derart ausgestaltet, dass der Extruderkopf (d.h. das antriebsabgewandte Ende des Extruders) mit dem Extruderauslass durch diese Öffnung in den Innenraum des Gehäuses des Schneidapparats hineinragen kann. Auf diese Weise kann extrudiertes Material direkt in den Innenraum gelangen, ohne eine Berührung mit einer Kante des Produkteinlasses zu erfahren.

Gemäss einer besonders bevorzugten Ausführungsform der vorliegenden Erfindung sind der Produkteinlass in den Schneidapparat und das Schneidwerkzeug im Schneidapparat koaxial angeordnet. Mit anderen Worten hat der Produkteinlass in den Schneidapparat einen runden Querschnitt mit einer Zentralachse und das Schneidwerkzeug eine kreisförmige Form mit ebenfalls einer Zentralachse, wobei beide Zentralachsen zusammenfallen. Das Schneidwerkzeug ist hierbei direkt vor dem Produkteinlass angeordnet, sodass in den Innenraum des Gehäuses des Schneidapparats eintretendes Material direkt und auf schonende Weise ohne Kontakt mit Flächen zum Schneidwerkzeug gelangt. Es ist aber auch eine etwas versetzte Anordnung des Schneidwerkzeugs denkbar, so dass ein exzentrisches Schneiden durchgeführt werden kann.

Der erfindungsgemässe Schneidapparat weist Mittel zur Befestigung des Schneidapparats an einem Extruder auf. Vorzugsweise handelt es sich um lösbare Befestigungsmittel wie Schrauben, damit der Schneidapparat beispielsweise für Wartungszwecke oder zum Austausch von dem Extruder entfernt werden kann. Vorzugsweise kann der erfindungsgemässe Schneidapparat über eine Befestigungsplatte mit dem Extruder oder einem am Extruder angeordneten Kühlwerkzeug lösbar verbunden sein, wie dies beispielsweise in der EP-3 539 748 A1 beschrieben ist.

Gemäss einer weiteren bevorzugten Ausführungsform ist der erfindungsgemässe Schneidapparat aufklappbar. Das Gehäuse des Schneidapparats besteht bei einer derartige Ausführungsform vorzugsweise aus zwei Teilen, welche mittels eines Verschlusses miteinander verbunden sind. Wir der Verschluss gelöst, kann ein Teil über ein Scharnier vom anderen Teil weggeschwenkt werden. Dadurch wird der Innenraum des Schneidapparats zugänglich, beispielsweise für Reinigungs- oder Wartungszwecke.

Der erfindungsgemässe Schneidapparat kann an jedem herkömmlichen Extruder angeordnet werden.

Die vorliegende Erfindung betrifft somit auch einen Extruder, umfassend einen vorstehend beschriebenen erfindungsgemässen Schneidapparat.

Extruder sind hinlänglich bekannt. Es wird z.B. auf die WO 2012/158023 A1 oder auf die Extruder, insbesondere Doppelschneckenextruder, von Bühler verwiesen. Solche Extruder haben vorzugsweise ein L/D-Verhältnis (Gesamtlänge zu Schneckendurchmesser) im Bereich von 12 -60, vorzugsweise 20 bis 40. Erfindungsgemäß werden die Extruder vorzugsweise mit 100 bis 1000 U/min, besonders bevorzugt mit 200 bis 600 U/min und besonders bevorzugt mit 250 bis 350 U/min betrieben.

Der erfindungsgemässe Extruder umfasst einen Motor mit einem Getriebe, um die Extruderschnecken anzutreiben. Zu diesem Zweck ist die Tragwelle jeder vorhandenen Extruderschnecke operativ mit dem Getriebe verbunden. Dies kann auf herkömmlich bekannte Art erfolgen.

Der erfindungsgemässe Extruder umfasst weiterhin ein Extrudergehäuse mit einer im Gehäuse befindlichen Prozesszone und einem Einlass und Auslass. Das Extrudergehäuse umfasst vorzugsweise 2 bis 20 Barrel, bevorzugter 2 bis 15 Barrels. Die Barrels sind vorzugsweise stirnseitig miteinander verbunden und bilden zusammen das Extrudergehäuse.

Das Extrudergehäuse (beziehungsweise jedes der das Extrudergehäuse bildenden Barrels) weist eine Durchgangsbohrung auf. Die Durchgangsbohrung durchläuft das Extrudergehäuse axial durch dessen gesamte Länge. Innerhalb dieser Durchgangsbohrung befindet sich die Prozesszone des Extruders.

Das Gehäuse des Extruders ist vorzugsweise temperaturgesteuert. Das zu extrudierende Material wird unter Druck (üblicherweise 1 bis 400 bar, vorzugsweise 1 bis 200 bar) geknetet, um eine homogene Mischung zu bilden. Dabei wird in der Regel ein Energieaufwand von 10 bis 150 Wh/kg, vorzugsweise 10 bis 120 Wh/kg, besonders bevorzugt 15 bis 30 Wh/kg betrieben.

Der Einlass des Extruders dient zum Einbringen von Rohstoffen in einen ersten Abschnitt des Extruders. Dieser Einlass mündet in die Prozesszone. Der Einlass befindet sich üblicherweise und bevorzugt auf dem Extrudergehäuse, so dass Material unter Einwirkung der Schwerkraft in das Extrudergehäuse, genauer in der Prozesszone des Extruders, gelangen kann.

Das zu extrudierende Material kann direkt durch den Einlass in die Prozesszone gegeben werden. Vorzugsweise befindet sich oberhalb des Einlasses eine Dosiervorrichtung, mit welcher das zu extrudierende Material dosiert und gegebenenfalls vermischt wird, bevor es durch den Einlass geführt wird. Erfindungsgemäss bevorzugt kann das zu extrudierende Material vorgängig in einem herkömmlichen Vorkonditionierer vorbehandelt und von diesem, beispielsweise mittels einer herkömmlichen Förderschnecke, dem Einlass zugeführt werden.

Am dem zum Einlass entfernten Ende der Prozesszone befindet sich ein Auslass, durch welchen das extrudierte Material den Extruder verlässt. Der Auslass ist mit der Prozesszone verbunden.

Der Extruder verfügt typischerweise auch über eine Wasser-, eine Öl- und gegebenenfalls eine Dampfzufuhrleitung.

Gemäß einer bevorzugten Ausführungsform der vorliegenden Erfindung kann am Ausgang des Extruders ein Kühlwerkzeug wie eine Kühldüse vorgesehen sein. Kühlwerkzeuge für Extruder sind hinreichend bekannt. Zwischen Extruder und Kühlwerkzeug kann vorzugsweise eine bekannte Verteilereinheit angeordnet sein.

Wie vorstehend beschrieben ist der erfindungsgemässe Schneidapparat am Auslassende des Extruders oder am Auslassende eines am Auslassende des Extruders bereitgestellten Kühlwerkzeugs angeordnet, sofern ein Kühlwerkzeug vorhanden ist.

Für den Fall, dass ein Kühlwerkzeug vorhanden ist, gelten die vorstehenden Ausführungen betreffend den Extruderkopf analog für das Ende des Kühlwerkzeugs. Mit andere Worten ragt dann vorzugsweise ein Ende des Kühlwerkzeugs durch den Produkteinlass des Schneidapparats in den Innenraum des Gehäuses des Schneidapparats.

Wie vorstehend ausgeführt ist der erfindungsgemässe Schneidapparat über eine Befestigungsplatte mit dem Extruder oder dem Kühlwerkzeug lösbar verbunden.

Der Schneidapparat kann ferner einen Träger aufweisen, mit welchem der Schneidapparat auf dem Boden eines Gebäudes wie einer Halle abgestützt werden kann.

Die vorliegende Erfindung betrifft weiterhin eine Extrusionsanlage, umfassend einen Extruder gemäss der vorstehenden Beschreibung sowie mindestens eine Einheit ausgewählt aus der Gruppe bestehend aus einer mit dem Einlassrohr des Schneidapparats in Verbindung stehenden Gaseinleitungseinheit und einer mit dem Auslassrohr des Schneidapparats in Verbindung stehenden Gasausleitungseinheit.

Wie vorstehend beschrieben wird während des bestimmungsgemässen Gebrauchs im Schneidapparat eine Zyklonströmung erzeugt. Eine Zyklonströmung ist eine kreisförmige Strömung um einen Mittelpunkt, analog einem Wirbelsturm.

Um die Zyklonströmung zu erzeugen, kann gemäss einer Ausführungsform der vorliegenden Erfindung Luft mit Hilfe einer Gaseinleitungseinheit durch das Einlassrohr in den Innenraum des Schneidapparats geleitet werden. Üblicherweise erfolgt dies durch Einleiten eines Druckluftstroms. Die Gaseinleitungseinheit ist daher vorzugsweise eine Einheit, in welcher Luft komprimiert und unter Druck freigesetzt werden kann. Beispielhaft sei eine Pumpe genannt.

Gemäss einer anderen Ausführungsform der vorliegenden Erfindung kann die Zyklonströmung aber auch erzeugt werden, indem Luft aus dem Innenraum des Gehäuses des Schneidapparats durch das Auslassrohr abgesaugt wird. Die Gasausleitungseinheit ist daher bevorzugt eine Luftansaugeinheit wie eine Pumpe.

Auch wenn die Zyklonströmung durch Einleiten von Druckluft in den Innenraum des Gehäuses des Schneidapparats erzeugt wird, kann eine vorstehend beschriebene Gasausleitungseinheit bereitgestellt sein, um das Austragen des Materials aus dem Schneidapparat zu unterstützen.

Das Einlassrohr und das Auslassrohr können mit bekannten Zuführungs-, Abführungs- oder Weiterverarbeitungseinrichtungen verbunden sein. Da erfindungsgemäss Einlassrohr und Auslassrohr sich seitlich oder besonders bevorzugt nach oben vom Schneidapparat weg erstrecken, können die entsprechenden Verbindungsleitungen oberhalb der Extrusionsanlage angeordnet sein, ohne dass sie Platz am Boden des Gebäudes einnehmen, in welchem die Extrusionsanlage aufgestellt ist. Dies ermöglicht eine leichtere Reinigung des Bodens unterhalb der Extrusionsanlage, weil keine Rohre oder Schläuche auf dem Boden liegen.

Die vorliegende Erfindung betrifft weiterhin ein Verfahren zur Herstellung eines extrudierten Materials mit einem Extruder gemäss einem der Ansprüche 5 bis 8, umfassend die Schritte:
- Extrusion des Materials im Extruder,
- Überführung des extrudierten Materials aus dem Extruder in den Schneidapparat,
- Schneiden des extrudierten Materials in dem Schneidapparat,
   und
- Abführung des extrudierten Materials aus dem Schneidapparat mittels einer Zyklonströmung.

Die Zyklonströmung kann wie vorstehend beschrieben durch Einleiten von Gas in den Innenraum des Gehäuses des Schneidapparats durch das Einlassrohr des Schneidapparats erzeugt werden.

Alternativ kann die Zyklonströmung wie vorstehend beschrieben durch Herausziehen von Gas aus dem Innenraum des Gehäuses des Schneidapparats durch das Auslassrohr des Schneidapparats erzeugt werden.

Erfindungsgemäss bevorzugt wird der Schneidapparat mit Heissluft betrieben, welche beispielsweise eine Temperatur im Bereich von 20 bis 150°C, vorzugsweise von 50 bis 100°C aufweist.

Erfindungsgemäss können sämtliche Nahrungsmittel oder Tierfutter hergestellt werden, welche üblicherweise durch Extrusion hergestellt werden. Beispielsweise sind proteinhaltige Mischungen für die Herstellung von Lebensmitteln einschliesslich Cerealien, Snacks, Tierfutter und alternativer Nahrungsmittel (wie alternativer Fleisch- und Fischprodukte) genannt.

Die vorliegende Erfindung wird nachfolgend anhand von nicht einschränkenden Ausführungsbeispielen unter Bezugnahme auf Figuren näher beschrieben. In den Figuren bezeichnen gleiche Bezugszeichen gleiche Elemente. Es zeigen:
- Fig. 1: eine schematische Ansicht einer Ausführungsform eines erfindungsgemässen Extruders
- Fig. 2a: eine schematische Ansicht einer Ausführungsform eines erfindungsgemässen Schneidapparats im geschlossenen Zustand
- Fig. 2b: eine schematische Ansicht eines Schnitts durch eine Ausführungsform eines erfindungsgemässen Schneidapparats
- Fig. 3a: eine Vorderansicht einer Ausführungsform eines erfindungsgemässen Schneidapparats
- Fig. 3b: eine Seitenansicht einer Ausführungsform eines erfindungsgemässen Schneidapparats
- Fig. 3c: eine Draufsicht auf eine Ausführungsform eines erfindungsgemässen Schneidapparats
- Fig. 4: eine schematische Darstellung der Zyklonströmung im Schneidapparat

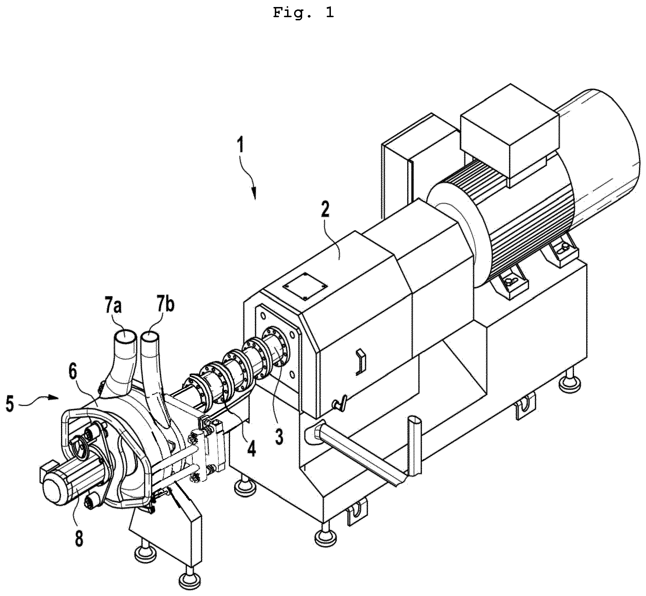

In Fig. 1 ist eine schematische Ansicht einer Ausführungsform eines erfindungsgemässen Extruders 1 gezeigt. Der Extruder 1 umfasst eine Antriebseinheit 2 mit einem Motor und einem Getriebe zum Antreiben einer im Extruder 1 angeordneten, nicht gezeigten Extruderwelle. Durch den Einlass 3 kann zu verarbeitendes Material in die Prozesszone 4 des Extruders 1 eingeführt werden. Die Prozesszone 4 ist aus mehreren Barrels aufgebaut. In der Prozesszone 4 wird das Material mittels einer Extruderschnecke wie gewünscht bearbeitet.

Das bearbeitete Material tritt aus dem Extruder 1 in den Schneidapparat 5 ein. Der Schneidapparat 5 umfasst ein Gehäuse 6, ein auf dem Gehäuse 6 angeordnetes Einlassrohr 7b und ein auf dem Gehäuse 6 angeordnetes Auslassrohr 7a. Einlassrohr 7b und Auslassrohr 7a sind in ihren unteren Abschnitten zueinander hin geneigt. An dem vom Extruder 1 abgewandten Ende des Schneidapparats 5 ist ein Motor 8 zum Betreiben eines im Schneidapparat 5 angeordneten, hier nicht gezeigten Schneidwerkzeugs bereitgestellt.

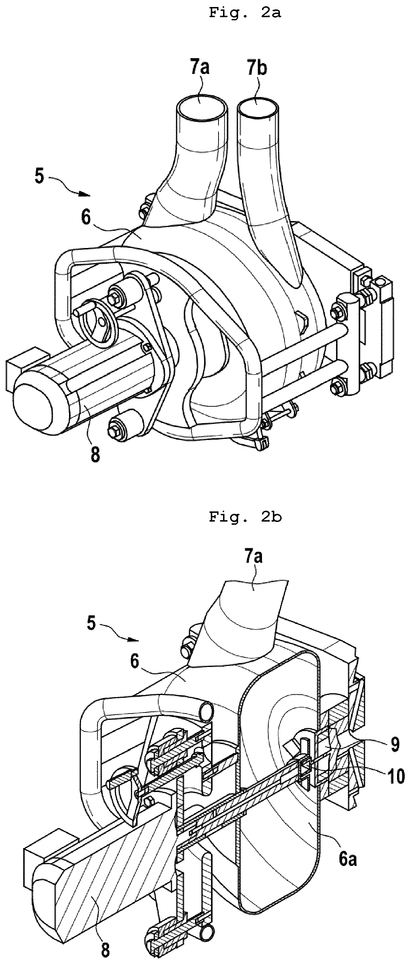

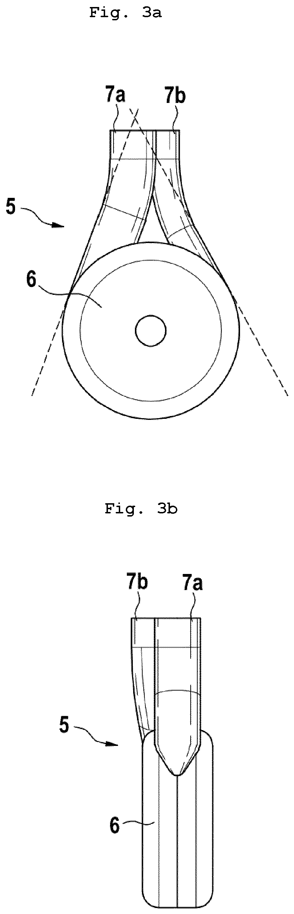

In Fig. 2a ist eine schematische Ansicht einer Ausführungsform eines erfindungsgemässen Schneidapparats 5 im geschlossenen Zustand gezeigt. Wie in Fig. 1 ist das Gehäuse 6 zylindrisch oder alternativ gerundet. Einlassrohr 7b und Auslassrohr 7a sind oben auf dem Gehäuse 6 derart angeordnet, dass eine gedachte Linie durch eine äussere Kante des Einlassrohrs 7b und des Auslassrohrs 7a in Bezug auf das zylindrische Gehäuse 6 eine Tangente ist. Dies wird nachstehend in Fig. 3a näher erläutert.

In Fig. 2b ist eine schematische Schnittansicht einer Ausführungsform eines erfindungsgemässen Schneidapparats 5 gezeigt. Im Gehäuse 6 befindet sich ein Innenraum 6a, in welchen das Einlassrohr 7b (nicht gezeigt) und das Auslassrohr 7a von oben und schräg in gegenüberliegende seitliche Bereiche des Innenraums 6a münden. An einem Ende des Schneidapparats 5 ist ein Produkteinlass 9 angeordnet, durch welchen Material aus dem Extruder 1 in den Innenraum 6a eingeführt werden kann. Im Innenraum 6a ist weiterhin ein Schneidwerkzeug 10 bereitgestellt, vorzugsweise koaxial mit dem Produkteinlass 9.

In Fig. 3a ist eine Vorderansicht einer Ausführungsform eines erfindungsgemässen Schneidapparats 5 gezeigt. Es ist zu erkennen, dass Einlassrohr 7b und Auslassrohr 7a oben auf dem Gehäuse 6 derart angeordnet sind, dass eine gedachte Linie (hier gestrichelt dargestellt) durch eine äussere Kante des Einlassrohrs 7b und des Auslassrohrs 7a in Bezug auf das zylindrische Gehäuse 6 eine Tangente ist.

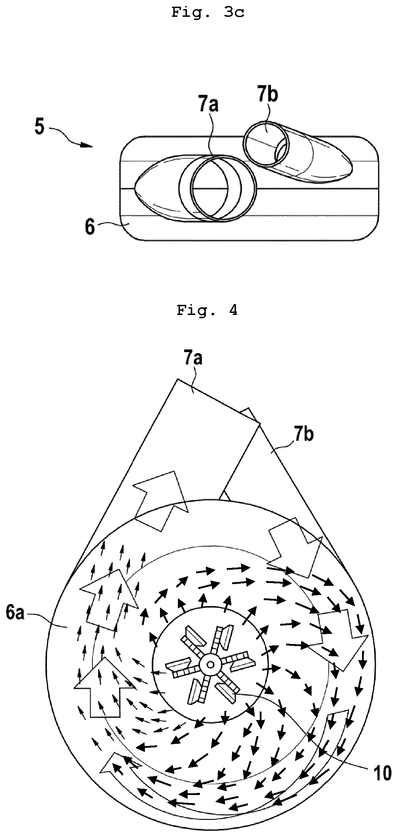

In Fig. 3b ist eine Seitenansicht einer Ausführungsform und in Fig. 3c eine Draufsicht auf eine Ausführungsform eines erfindungsgemässen Schneidapparats 5 gezeigt. Es ist zu erkennen, dass Einlassrohr 7b und Auslassrohr 7a in Längsrichtung des Schneidapparats etwas versetzt zueinander angeordnet sind.

In Fig. 4 ist eine schematische Darstellung der Zyklonströmung im Schneidapparat 5 gezeigt. Luft strömt durch das Einlassrohr 7b schräg in den Innenraum 6a und entlang der gerundeten bzw. zylindrischen Mantelfläche des Innenraums 6a bis zum Auslassrohr 7a, wo die Luft (zusammen mit zerkleinertem Material) den Schneidapparat 5 verlässt. Weiterhin ist das Schneidwerkzeug 10 dargestellt.

## Patentansprüche

1. Schneidapparat (5) für einen Nahrungs- oder Futtermittelextruder (1), umfassend
ein Gehäuse (6) mit einem zylindrischen Innenraum (6a),
ein Schneidwerkzeug (10),
einen Produkteinlass (9) an einem Ende des Gehäuses (6), wobei das Schneidwerkzeug (10) und der Produkteinlass (9) koaxial im Gehäuse (6) angeordnet sind,
ein Einlassrohr (7b) und ein Auslassrohr (7a),
**dadurch gekennzeichnet, dass** wenn der Schneidapparat (5) am Auslassende des Extruders (1) oder am Auslassende eines am Auslassende des Extruders (1) bereitgestellten Kühlwerkzeugs angeordnet ist, das Einlassrohr (7b) und das Auslassrohr (7a) von oben in das Gehäuse (6) münden und sich vom Gehäuse (6) nach oben weg erstrecken, und zumindest in einem Abschnitt, der mit dem Gehäuse (6) verbunden ist, schräg in gegenüberliegende seitliche Bereiche des Innenraums (6a) münden und zueinander hin geneigt sind, wobei der Neigungswinkel zwischen 30 und 80° liegt.

2. Schneidapparat nach Anspruch 1, **dadurch gekennzeichnet, dass** das Gehäuse (6) gerundet, insbesondere zylindrisch ist.

3. Schneidapparat nach Anspruch 2, **dadurch gekennzeichnet, dass** eine gedachte Linie durch eine äussere Kante des Einlassrohrs (7b) und des Auslassrohrs (7a) in Bezug auf das zylindrische Gehäuse (6) eine Tangente ist.

4. Schneidapparat nach einem der Ansprüche 1 bis 3, **dadurch gekennzeichnet, dass** der Schneidapparat (5) einen Motor (8) zum Antrieb des Schneidwerkzeugs (10) umfasst.

5. Extruder (1), umfassend einen Schneidapparat (5) gemäss einem der Ansprüche 1 bis 4.

6. Extruder nach Anspruch 1, **dadurch gekennzeichnet, dass** der Schneidapparat (5) über eine Befestigungsplatte mit dem Extruder (1) oder dem Kühlwerkzeug lösbar verbunden ist.

7. Extruder nach einem der Ansprüche 5 bis 6, **dadurch gekennzeichnet, dass** das Einlassrohr (7b) und das Auslassrohr (7a) des Schneidapparats (5) mit Leitungen oder Rohren verbunden sind, welche vom Schneidapparat (5) nach oben wegführen.

8. Extruder nach einem der Ansprüche 5 bis 7, **dadurch gekennzeichnet, dass** sich das Ende des Extruders (1) oder des Kühlwerkzeugs in das Gehäuse (6) des Schneidapparats (5) erstreckt.

9. Extrusionsanlage, umfassend einen Extruder (1) gemäss einem der Ansprüche 5 bis 8 sowie mindestens eine Einheit ausgewählt aus der Gruppe bestehend aus einer mit dem Einlassrohr (7b) des Schneidapparats (5) in Verbindung stehenden Gaseinleitungseinheit und einer mit dem Auslassrohr (7a) des Schneidapparats (5) in Verbindung stehenden Gasausleitungseinheit.

10. Verfahren zur Herstellung eines extrudierten Materials mit einem Extruder (1) gemäss einem der Ansprüche 5 bis 8, umfassend die Schritte:
- Extrusion des Materials im Extruder (1),
- Überführung des extrudierten Materials aus dem Extruder (1) in den Schneidapparat (5),
- Schneiden des extrudierten Materials in dem Schneidapparat (5), und
- Abführung des extrudierten Materials aus dem Schneidapparat (5) mittels einer Zyklonströmung.

11. Verfahren nach Anspruch 10, **dadurch gekennzeichnet, dass** die Zyklonströmung durch Einleiten von Gas in den Innenraum (6a) des Gehäuses (6) des Schneidapparats (5) durch das Einlassrohr (7a) des Schneidapparats (5) erzeugt wird.

12. Verfahren nach Anspruch 10, **dadurch gekennzeichnet, dass** die Zyklonströmung durch Herausziehen von Gas aus dem Innenraum (6a) des Gehäuses (6) des Schneidapparats (5) durch das Auslassrohr (7a) des Schneidapparats (5) erzeugt wird.

## Claims

1. A cutting apparatus (5) for a food or feed extruder (1), comprising
a housing (6) with a cylindrical interior (6a),
a cutting tool (10),
a product inlet (9) at one end of the housing (6), the cutting tool (10) and the product inlet (9) being arranged coaxially in the housing (6),
an inlet tube (7b) and an outlet tube (7a),
**characterised in that** when the cutting apparatus (5) is arranged at the outlet end of the extruder (1) or at the outlet end of a cooling tool provided at the outlet end of the extruder (1), the inlet tube (7b) and the outlet tube (7a) open into the housing (6) from above and extend upwards away from the housing (6), and, at least in a section connected to the housing (6), open obliquely into opposite lateral regions of the interior (6a) and are inclined towards one another, the angle of inclination being between 30 and 80°.

2. Cutting apparatus according to claim 1, **characterised in that** the housing (6) is rounded, in particular cylindrical.

3. Cutting apparatus according to claim 2, **characterised in that** an imaginary line through an outer edge of the inlet tube (7b) and the outlet tube (7a) with respect to the cylindrical housing (6) is a tangent.

4. Cutting apparatus according to any one of claims 1 to 3, **characterised in that** the cutting apparatus (5) comprises a motor (8) for driving the cutting tool (10).

5. An extruder (1), comprising a cutting apparatus (5) according to any one of claims 1 to 4.

6. Extruder according to claim 5, **characterised in that** the cutting apparatus (5) is detachably connected to the extruder (1) or the cooling tool via a mounting plate.

7. Extruder according to any one of claims 5 to 6, **characterised in that** the inlet tube (7b) and the outlet tube (7a) of the cutting apparatus (5) are connected to lines or tubes which lead away upwards from the cutting apparatus (5).

8. Extruder according to any one of claims 5 to 7, **characterised in that** the end of the extruder (1) or of the cooling tool extends into the housing (6) of the cutting apparatus (5).

9. An extrusion plant, comprising an extruder (1) according to any one of claims 5 to 8 and at least one unit selected from the group consisting of a gas inlet unit connected to the inlet tube (7b) of the cutting apparatus (5) and a gas outlet unit connected to the outlet tube (7a) of the cutting apparatus (5).

10. A method for producing an extruded material with an extruder (1) according to any one of claims 5 to 8, comprising the steps of:
- Extruding the material in the extruder (1),
- transferring the extruded material from the extruder (1) into the cutting unit (5),
- cutting the extruded material in the cutting apparatus (5), and
- discharging the extruded material from the cutting apparatus (5) by means of a cyclone flow.

11. Method according to claim 10, **characterised in that** the cyclone flow is generated by introducing gas into the interior (6a) of the housing (6) of the cutting apparatus (5) through the inlet tube (7a) of the cutting apparatus (5).

12. Method according to claim 10, **characterised in that** the cyclone flow is generated by drawing gas out of the interior (6a) of the housing (6) of the cutting apparatus (5) through the outlet tube (7a) of the cutting apparatus (5).

## Revendications

1. Dispositif de coupe (5) pour une extrudeuse (1) de produits alimentaires ou de fourrage, comprenant
un boîtier (6) avec un espace intérieur cylindrique (6a),
un outil de coupe (10),
une entrée de produit (9) à une extrémité du boîtier (6),
l'outil de coupe (10) et l'entrée de produit (9) étant disposés coaxialement dans le boîtier (6),
un tube d'entrée (7b) et un tube de sortie (7a),
**caractérisé en ce que,** lorsque le dispositif de coupe (5) est disposé à l'extrémité de sortie de l'extrudeuse (1) ou à l'extrémité de sortie d'un outil de refroidissement prévu à l'extrémité de sortie de l'extrudeuse (1), le tube d'entrée (7b) et le tube de sortie (7a) débouchent dans le boîtier (6) par le haut et s'étendent vers le haut à partir du boîtier (6), et, au moins dans une partie reliée au boîtier (6), débouchent obliquement dans des zones latérales opposées de l'espace intérieur (6a) et sont inclinés l'un vers l'autre, l'angle d'inclinaison étant compris entre 30 et 80°.

2. Dispositif de coupe selon la revendication 1, **caractérisé en ce que** le boîtier (6) est arrondi, notamment cylindrique.

3. Dispositif de coupe selon la revendication 2, **caractérisé en ce qu'**une ligne imaginaire passant par un bord extérieur du tube d'entrée (7b) et du tube de sortie (7a) par rapport au boîtier cylindrique (6) est une tangente.

4. Dispositif de coupe selon l'une des revendications 1 à 3, **caractérisé en ce que** le dispositif de coupe (5) comprend un moteur (8) d'entraînement de l'outil de coupe (10).

5. Extrudeuse (1) comprenant un dispositif de coupe (5) selon l'une quelconque des revendications 1 à 4.

6. Extrudeuse selon la revendication 5, **caractérisée en ce que** le dispositif de coupe (5) est relié de manière amovible à l'extrudeuse (1) ou à l'outil de refroidissement par une plaque de fixation.

7. Extrudeuse selon l'une des revendications 5 à 6, **caractérisée en ce que** le tube d'entrée (7b) et le tube de sortie (7a) du dispositif de coupe (5) sont reliés à des conduits ou tubes s'éloignant du dispositif de coupe (5) vers le haut.

8. Extrudeuse selon l'une des revendications 5 à 7, **caractérisée en ce que** l'extrémité de l'extrudeuse (1) ou de l'outil de refroidissement s'étend dans le corps (6) du dispositif de coupe (5).

9. Installation d'extrusion comprenant une extrudeuse (1) selon l'une quelconque des revendications 5 à 8 ainsi qu'au moins une unité choisie dans le groupe constitué par une unité d'introduction de gaz communiquant avec le tube d'entrée (7b) du dispositif de coupe (5) et une unité d'évacuation de gaz communiquant avec le tube de sortie (7a) du dispositif de coupe (5).

10. Procédé de fabrication d'un matériau extrudé avec une extrudeuse (1) selon l'une des revendications 5 à 8, comprenant les étapes suivantes :
- Extrusion du matériau dans l'extrudeuse (1),
- Transfert du matériau extrudé de l'extrudeuse (1) dans le dispositif de coupe (5),
- coupe du matériau extrudé dans le dispositif de coupe (5), et
- évacuation du matériau extrudé du dispositif de coupe (5) au moyen d'un écoulement cyclonique.

11. Procédé selon la revendication 10, **caractérisé en ce que** l'écoulement cyclonique est généré en introduisant du gaz dans l'espace intérieur (6a) du boîtier (6) du dispositif de coupe (5) par le tube d'entrée (7a) du dispositif de coupe (5).

12. Procédé selon la revendication 10, **caractérisé en ce que** l'écoulement cyclonique est généré en extrayant du gaz de l'espace intérieur (6a) du boîtier (6) du dispositif de coupe (5) par le tube de sortie (7a) du dispositif de coupe (5).
